(19) **Europäisches Patentamt / European Patent Office / Office européen des brevets**

(11) **EP 4 674 914 A1**

(12) # EUROPEAN PATENT APPLICATION
published in accordance with Art. 153(4) EPC

(43) Date of publication:
07.01.2026 Bulletin 2026/02

(21) Application number: 24764027.9

(22) Date of filing: 01.03.2024

(51) International Patent Classification (IPC):
C08L 101/00 (2006.01)　　　B65D 1/02 (2006.01)
B65D 30/02 (2006.01)　　　C08J 11/06 (2006.01)
C08K 5/098 (2006.01)　　　C08L 23/08 (2025.01)
C08L 23/26 (2025.01)　　　C08L 29/04 (2006.01)
C08L 31/04 (2006.01)

(52) Cooperative Patent Classification (CPC):
B65D 1/02; B65D 29/00; C08J 11/06; C08K 5/098;
C08L 23/08; C08L 23/26; C08L 29/04; C08L 31/04;
C08L 101/00

(86) International application number:
PCT/JP2024/007673

(87) International publication number:
WO 2024/181550 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.03.2023 JP 2023032151
29.02.2024 JP 2024029696

(71) Applicant: Tosoh Corporation
Yamaguchi 746-8501 (JP)

(72) Inventors:
• KUGIMOTO, Daisuke
Yokkaichi-shi, Mie 510-8540 (JP)
• FUKUHARA, Yuki
Yokkaichi-shi, Mie 510-8540 (JP)
• KIKUCHI, Genzo
Yokkaichi-shi, Mie 510-8540 (JP)
• KOUDA, Shingo
Yokkaichi-shi, Mie 510-8540 (JP)
• YAMAMOTO, Mikiya
Tokyo 131-8501 (JP)

(74) Representative: Novagraaf International SA
Chemin de l'Echo 3
1213 Onex, Geneva (CH)

(54) **RESIN COMPOSITION AND MOLDED ARTICLE IN WHICH SAID RESIN COMPOSITION IS USED**

(57) The present invention aims to provide a resin composition which, when formed into a film, exhibits reduced occurrence of fisheyes, and a film using the resin composition. A resin composition comprising: 70 parts by weight or more and 98.99 parts by weight or less of two or more types of thermoplastic resins (A) comprising at least a polyolefin, and being derived from a recovered material of a used plastic product; 1 part by weight or more and 29.99 parts by weight or less of a compatibilizer (B); and 0.01 parts by weight or more and 5 parts by weight or less of at least one selected from the group consisting of a fatty acid metal salt (C) or a saponified ethylene-vinyl acetate copolymer (D), provided that a total amount of (A), (B), and (C) and/or (D) is 100 parts by weight.

EP 4 674 914 A1

**Description**

Technical Field

The present invention relates to a resin composition comprising a thermoplastic resin derived from a recovered material of a used plastic product.

Background Art

In recent years, increasing attention has been paid to environmental pollution caused by plastics, and material recycling of plastic products has been promoted.

In material recycling of plastics, generally, recycling of recovered plastic waste containing dissimilar plastics in a mixed state causes a problem of deterioration of physicochemical properties of the recycled plastic due to poor compatibility among the plastics. Accordingly, a process has conventionally been employed in which the recovered plastic waste is sorted by material type prior to reprocessed into products.

However, multilayer films, multilayer containers, and the like, in which dissimilar plastics are laminated (hereinafter referred to as composite plastics), are difficult to sort by material type. Thus, composite plastics cannot be recycled, and are currently subjected to landfill disposal or incineration treatment.

In view of the above background, as a means for recycling composite plastics, the addition of compatibilizers has been studied.

For example, it has been disclosed that the physicochemical properties of the composite plastics can be improved by adding a compatibilizer to the composite plastics such as polyethylene (PE) and polyethylene terephthalate (PET), or polypropylene (PP) and acrylonitrile-butadiene-styrene copolymer (ABS) (see Patent Literature 1).

However, the present inventors have found, during the study of recycling the composite plastics, that when recycled resins containing PET or polyamide in polyolefin is formed into a film, appearance defects called fisheyes frequently occur. Furthermore, such appearance defects called fisheyes were found to occur not only in recycled resins containing polyolefin and resins other than a polyolefin, but also in recycled resins containing two or more types of polyolefin resins, depending on the combination thereof.

Citation List

Patent Literature

Patent Literature 1: JP2001-220473A

Summary of Invention

Technical Problem

The present invention aims to provide a resin composition which, when formed into a film, exhibits reduced occurrence of fisheyes, and a film using the resin composition.

Solution to Problem

The present inventors, as a result of extensive studies conducted to solve the above-described problems, have found that a resin composition obtained by adding a compatibilizer and a component exhibiting slipperiness in predetermined amounts to a recovered material of a used plastic product containing two or more types of thermoplastic resins including at least a polyolefin exhibits a reduced occurrence of fisheyes when formed into a film, thereby completing the present invention.

That is, aspects of the present invention are the following [1] to [15].

[1] A resin composition comprising:
70 parts by weight or more and 98.99 parts by weight or less of two or more types of thermoplastic resins (A) comprising at least a polyolefin, and being derived from a recovered material of a used plastic product; 1 part by weight or more and 29.99 parts by weight or less of a compatibilizer (B); and 0.01 parts by weight or more and 5 parts by weight or less of a fatty acid metal salt (C) and/or a saponified ethylene-vinyl acetate copolymer (D), provided that a total amount of (A), (B), and (C) and/or (D) is 100 parts by weight.

[2] The resin composition according to [1], wherein the thermoplastic resins (A) comprise at least one resin selected from the group consisting of a polyester, a polyamide, and an ethylene-vinyl alcohol copolymer, as a component other than the polyolefin.

[3] The resin composition according to [2], wherein the polyester is polyethylene terephthalate, and the polyamide is nylon 6 or nylon 66.

[4] The resin composition according to any one of [1] to [3], wherein the compatibilizer (B) is an ethylene-vinyl acetate copolymer and/or a maleic anhydride-modified polyolefin.

[5] The resin composition according to any one of [1] to [4], wherein the fatty acid metal salt (C) is at least one selected from the group consisting of stearates and hydroxystearates of magnesium, calcium, or zinc.

[6] The resin composition according to any one of [1] to [5], wherein the saponified ethylene-vinyl acetate copolymer (D) is a saponified product of an ethylene-vinyl acetate copolymer having an ethylene content of 75 mol% or more and 95 mol% or less and a vinyl acetate content of 5 mol% or more and 25 mol% or less, and the saponified product has a saponification degree of vinyl acetate component of 20% by weight or more.

[7] The resin composition according to any one of [1] to [6], wherein the saponified ethylene-vinyl acetate copolymer (D) has a melt mass-flow rate of 40 g/10 min or more, as measured under the conditions of 190°C and a load of 2160 g in accordance with JIS K 6924-1.

[8] The resin composition according to any one of [1] to [7], wherein the used plastic product is at least one selected from the group consisting of food packaging container, sanitary product packaging container, cosmetic packaging container, and daily commodity packaging container.

[9] A film formed of the resin composition according to any one of [1] to [8].

[10] A multilayer film comprising at least one layer formed of the resin composition according to any one of [1] to [8].

[11] A packaging container formed of the film according to [9].

[12] A packaging container formed of the film according to [10].

[13] A method for producing the film according to [9], comprising molding the resin composition according to any one of [1] to [8] at a temperature of 190°C or more and 250°C or less.

[14] A method for producing the multilayer film according to [10], comprising molding the resin composition according to any one of [1] to [8] at a temperature of 190°C or more and 250°C or less.

[15] A method for producing a resin composition, comprising a step of obtaining a molten mixture comprising: 70 parts by weight or more and 98.99 parts by weight or less of two or more types of thermoplastic resins (A) comprising at least a polyolefin, and being derived from a recovered material of a used plastic product; 1 part by weight or more and 29.99 parts by weight or less of a compatibilizer (B); and 0.01 parts by weight or more and 5 parts by weight or less of a fatty acid metal salt (C) and/or a saponified ethylene-vinyl acetate copolymer (D).

Advantageous Effect of Invention

Since the resin composition exhibits a reduced number of fisheyes when formed into a film, a resin composition according to one aspect of the present invention is useful as a raw material for recycled products having excellent appearance.

Description of Embodiments

Hereinafter, the present invention will be described in detail with reference to preferred embodiments thereof.

A resin composition according to one aspect of the present invention comprises 70 parts by weight or more and 98.99 parts by weight or less of two or more types of thermoplastic resins (A) comprising at least a polyolefin, and being derived from a recovered material of a used plastic product, 1 part by weight or more and 29.99 parts by weight or less of a compatibilizer (B), and 0.01 parts by weight or more and 5 parts by weight or less of at least one selected from the group consisting of a fatty acid metal salt (C) or a saponified ethylene-vinyl acetate copolymer (D).

The two or more types of thermoplastic resins (A) comprising at least a polyolefin is constituted of two or more thermoplastic resins, and at least one of the thermoplastic resins is a polyolefin. In other words, the thermoplastic resins (A) may comprise a polyolefin and a thermoplastic resin other than a polyolefin, or may comprise two or more (two or more types) polyolefins. From the viewpoint of further suppressing the occurrence of fisheyes, it is preferred that the two or more types of thermoplastic resins (A) comprising at least a polyolefin comprises a polyolefin and a resin other than a polyolefin. Examples of the resin other than a polyolefin include polyamide, ethylene-vinyl alcohol copolymer, polyester, and polystyrene.

Examples of the polyolefin include high-density polyethylene, low-density polyethylene, linear low-density polyethylene, polypropylene, ethylene-propylene copolymer, ethylene-acrylic acid ester copolymer, and ethylene-methacrylic acid ester copolymer and these may be used alone or two or more. In the present specification, low-density polyethylene means polyethylene having a density of 910 $kg/m^3$ or more and less than 930 $kg/m^3$, and high-density polyethylene means polyethylene having a density of 930 $kg/m^3$ or more. The density of polyethylene can be measured in accordance with JIS K 6922-1 (2011).

Examples of the polyamide include nylon 6, nylon 6,6, nylon 11, and nylon 12 and these may be used alone or two or more.

Examples of the polyester include polyethylene terephthalate, glycol-modified polyethylene terephthalate (PETG resin), polybutylene terephthalate, and polylactic acid and these may be used alone or two or more.

Among these, as the resin comprised in the two or more types of thermoplastic resins (A) comprising at least a polyolefin, it is preferred to use at least one selected from the group consisting of high-density polyethylene, low-density polyethylene, linear low-density polyethylene, and polypropylene as the polyolefin, from the viewpoint of excellent film formability. It is more preferred to use at least any one of low-density polyethylene and linear low-density polyethylene, from the viewpoint of excellent film formability. As the resin other than a polyolefin, it is preferred to use at least one selected from the group consisting of a polyester, a polyamide, and an ethylene-vinyl alcohol copolymer. As the polyester, it is more preferred to use polyethylene terephthalate, and as the polyamide, it is more preferred to use at least any one of nylon 6 and nylon 6,6.

The two or more types of thermoplastic resins (A) comprising at least a polyolefin is derived from a recovered material of a used plastic product. Here, "derived from a recovered material of a used plastic product" means that the recovered material of a used plastic product are used as a raw material, and for example, as the thermoplastic resins (A), thermoplastic resins contained in the recovered material of a used plastic product can be used. The two or more types of thermoplastic resins (A) comprising at least a polyolefin may be derived not only from a recovered material of one type of used plastic product, but also from a recovered material of two or more types of plastic products.

The recovered material of a used plastic product may contain components other than thermoplastic resins, as long as it contains thermoplastic resins. For example, the recovered material of a used plastic product may include, as long as includes thermoplastic resins such as a resin film layer, a printing layer (for example, a layer formed by offset printing, screen printing, gravure printing, and flexographic printing), a protective layer (for example, medium printing layer, a coating layer formed by coating with varnish, cellulose nanofiber (CNF), and the like, and a UV absorbing layer), an inorganic layer (for example, a metal layer such as aluminum foil) on the surface or between layers. Furthermore, the recovered material of a used plastic product may include a vapor-deposited resin film layer in which an inorganic oxide (such as silica or alumina) or a metal (such as aluminum) are vapor-deposited on the surface of the resin film layer.

From the viewpoint of excellent film strength, it is preferable that, with respect to 100 parts by weight of the thermoplastic resins (A), the polyolefin is comprised in an amount of 70 parts by weight or more and 99 parts by weight or less, and the thermoplastic resin other than a polyolefin is comprised in an amount of 1 part by weight or more and 30 parts by weight or less, as the ratio of the thermoplastic resins included in the two or more types of thermoplastic resins (A) comprising at least a polyolefin.

The recovered material of a used plastic product refers to those that have once been used as products in the market and then collected, and as a specific example, recovered materials of packaging containers may be exemplified. The packaging container is not particularly limited, but from the viewpoint of safety of contents and safety of materials used in plastic packaging containers, a plastic packaging container discard by consumers and having a multilayer structure, such as a food packaging container, a sanitary product packaging container, a cosmetic packaging container, or a daily commodity packaging container, is preferred. The recovered material of plastic products may be a recyclable plastic product, but from the viewpoint of reducing plastic waste, it is preferred to use such waste products, and a mixture thereof may also be used. The shape is not particularly limited, and examples include film, bottle, pouch, cup, tray, and tube.

In addition, as the recovered material of a used plastic product, end materials generated during the producing process of plastic products and not having product value themselves may also be used. However, from the viewpoint of reducing marine plastic waste, it is preferred that the recovered material of a used plastic product includes recovered materials of plastic products discarded by consumers, and it is more preferred that 100% by weight of the two or more types of thermoplastic resins (A) comprising at least a polyolefin is derived from such recovered materials (waste products).

The compatibilizer (B) is not particularly limited as long as it can compatibilize the two or more types of thermoplastic resins (A) comprising at least a polyolefin, and examples include ethylene-vinyl acetate copolymer, acid-modified polyolefin, ethylene-glycidyl methacrylate copolymer, ionomer resin, and oxazoline group-containing resin and these may be used alone or two or more.

As the acid-modified polyolefin, specific examples include maleic anhydride-modified polyethylene, maleic anhydride-modified polypropylene, maleic anhydride-modified ethylene-propylene (block or random) copolymer, maleic anhydride-modified ethylene-ethyl acrylate copolymer, and maleic anhydride-modified ethylene-vinyl acetate copolymer and these may be used alone or two or more.

As the ionomer resin, examples include ethylene-methacrylic acid copolymer ionomer, propylene-methacrylic acid copolymer ionomer, butylene-methacrylic acid copolymer ionomer, and ethylene-vinylsulfonic acid copolymer ionomer and these may be used alone or two or more. Examples of the counterion of the ionomer resin include lithium ion, sodium ion, potassium ion, magnesium ion, calcium ion, and zinc ion.

As the oxazoline group-containing resin, examples include oxazoline group-containing polystyrene.

Among these, it is preferred that the compatibilizer (B) is at least any one selected from an ethylene-vinyl acetate copolymer and a maleic anhydride-modified polyethylene, from the viewpoint of excellent film formability and film strength and it is more preferred that the compatibilizer (B) is an ethylene-vinyl acetate copolymer, from the viewpoint of excellent film appearance.

The ethylene-vinyl acetate copolymer may be an ethylene-vinyl acetate copolymer composition comprising the plurality of ethylene-vinyl acetate copolymers having different vinyl acetate contents. In this case, from the viewpoint of compatibilization, it is preferred that the number of types of ethylene-vinyl acetate copolymers is three or more. Furthermore, from the viewpoint of compatibilization, when the ethylene-vinyl acetate copolymer composition comprising the plurality of ethylene-vinyl acetate copolymers is set as 100 mass%, it is preferred that the difference in vinyl acetate content between any two ethylene-vinyl acetate copolymers is 40% by weight or less, and it is more preferred that the difference in vinyl acetate content between at least one pair of ethylene-vinyl acetate copolymers is 5% by weight or more.

The compatibilizer (B) preferably has a melt mass-flow rate of 1 g/10 min or more as measured based on JIS K 6924-1 (under conditions of 190°C and a load of 2160 g), and more preferably 5 g/10 min or more. The upper limit of the melt mass-flow rate is not particularly limited, but is, for example, 1000 g/10 min or less. As a result, the plurality of thermoplastic resins included in the thermoplastic resins (A) can be more easily compatibilized.

The fatty acid metal salt (C) is not particularly limited, but it is preferred to be at least one selected from the group consisting of stearate and hydroxystearate of magnesium, calcium, or zinc, from the viewpoint of excellent fisheye suppression effect.

Examples of these metal salts of fatty acids include magnesium stearate, calcium stearate, zinc stearate, magnesium hydroxystearate, calcium hydroxystearate, and zinc hydroxystearate.

The saponified ethylene-vinyl acetate copolymer (D) is a substance in which the vinyl acetate moiety of the ethylene-vinyl acetate copolymer is partially or completely converted to vinyl alcohol by a hydrolysis method. In other words, the saponified ethylene-vinyl acetate copolymer (D) may be a substance in which only a part of the vinyl acetate moiety of the ethylene-vinyl acetate copolymer is converted to vinyl alcohol, or may be a substance in which all of the vinyl acetate moiety of the ethylene-vinyl acetate copolymer is converted to vinyl alcohol.

The saponified ethylene-vinyl acetate copolymer (D) is not particularly limited, and is preferably a saponified product of a copolymer of ethylene and vinyl acetate having an ethylene content of 75 mol% or more and 95 mol% or less and a vinyl acetate content of 5 mol% or more and 25 mol% or less based on the sum of the ethylene content and the vinyl acetate content of 100 mol%, more preferably a saponified product of a copolymer of ethylene and vinyl acetate having an ethylene content of 85 mol% or more and 95 mol% or less and a vinyl acetate content of 5 mol% or more and 15 mol% or less.

Furthermore, regarding the saponification degree, it is preferred that the saponification degree of the vinyl acetate component calculated in accordance with JIS K 7192 (1999) is 20% by weight or more, more preferably 30% by weight or more and 100% by weight or less, still more preferably 61% by weight or more and 100% by weight or less, and particularly preferably 70% by weight or more and 100% by weight or less.

It is preferred that the saponified ethylene-vinyl acetate copolymer (D) has a melt mass-flow rate of 40 g/10 min or more as measured based on JIS K 6924-1 (under conditions of 190°C and a load of 2160 g), more preferably 100 g/10 min or more, and particularly preferably 200 g/10 min or more. The upper limit of the melt mass-flow rate is not particularly limited, but is, for example, 1000 g/10 min or less. Thereby, residence of the resin in the molding machine can be further suppressed.

Such a saponified ethylene-vinyl acetate copolymer can be conveniently selected from commercially available products, and is commercially available from Tosoh Corporation under the product name "Melthene H".

The content ratio of the two or more types of thermoplastic resins (A) comprising at least a polyolefin, the compatibilizer (B), and the fatty acid metal salt (C) and/or the saponified ethylene-vinyl acetate copolymer (D) are as follows: the thermoplastic resins (A) are 70 parts by weight or more and 98.99 parts by weight or less, the compatibilizer (B) is 1 part by weight or more and 29.99 parts by weight or less, and the fatty acid metal salt (C) and/or the saponified ethylene-vinyl acetate copolymer (D) is 0.01 parts by weight or more and 5 parts by weight or less. Here, the total amount of (A), (B), and (C) and/or (D) is 100 parts by weight.

It is noted that, with respect to the content ratio (0.01 parts by weight or more and 5 parts by weight or less) of the fatty acid metal salt (C) and/or the saponified ethylene-vinyl acetate copolymer (D), when only one of the fatty acid metal salt (C) and the saponified ethylene-vinyl acetate copolymer (D) is comprised in the resin composition of the present invention, the content ratio refers to that of only one component, and when both the fatty acid metal salt (C) and the saponified ethylene-vinyl acetate copolymer (D) are comprised in the resin composition of the present invention, the content ratio refers to the sum of the contents of the fatty acid metal salt (C) and the saponified ethylene-vinyl acetate copolymer (D). Moreover, the statement that the total amount of (A), (B), and (C) and/or (D) is 100 parts by weight means that, when only one of the fatty acid metal salt (C) and the saponified ethylene-vinyl acetate copolymer (D) is comprised in the resin composition of the present invention, the sum of the contents of the thermoplastic resins (A), the compatibilizer (B), and that one component (the fatty acid metal salt (C) or the saponified ethylene-vinyl acetate copolymer (D)) is 100 parts by weight. When both the fatty acid metal salt (C) and the saponified ethylene-vinyl acetate copolymer (D) are comprised in the resin composition of the present invention, the sum of the contents of the thermoplastic resins (A), the compatibilizer (B), the fatty acid metal salt (C), and the saponified ethylene-vinyl acetate copolymer (D) is 100 parts by weight.

In the resin composition of the present embodiment, it is more preferred that the content ratio of each component is such that the two or more types of thermoplastic resins (A) comprising at least a polyolefin are 80 parts by weight or more and 98.9 parts by weight or less, the compatibilizer (B) is 1 part by weight or more and 19.9 parts by weight or less, and the fatty acid metal salt (C) and/or the saponified ethylene-vinyl acetate copolymer (D) is 0.1 parts by weight or more and 3 parts by weight or less. It is most preferred that the two or more types of thermoplastic resins (A) comprising at least a polyolefin is 90 parts by weight or more and 98.8 parts by weight or less, the compatibilizer (B) is 1 part by weight or more and 9.8 parts by weight or less, and the fatty acid metal salt (C) and/or the saponified ethylene-vinyl acetate copolymer (D) is 0.2 parts by weight or more and 2 parts by weight or less. It is noted that the total amount of (A), (B), (C), and (D) is 100 parts by weight.

When the compatibilizer (B) is 1 part by weight or more, it is preferred from the viewpoint of excellent heat seal strength and film appearance. When it is 29.99 parts by weight or less, it is preferred from the viewpoint of excellent film formability. Furthermore, when the content of the fatty acid metal salt (C) and/or the saponified ethylene-vinyl acetate copolymer (D) is 0.01 parts by weight or more, it is preferred from the viewpoint of excellent fisheye suppression effect, and when it is 5 parts by weight or less, it is preferred because film formability does not deteriorate.

The above resin composition may be blended, as needed, with virgin resin in addition to the above components ((A), (B), and (C) and/or (D)). The virgin resin to be blended is not particularly limited, but linear low-density polyethylene and low-density polyethylene are preferred from the viewpoint of excellent film formability.

The melt mass-flow rate (MFR) of the above resin composition measured under the conditions of 190°C and a load of 2160 g is not particularly limited, but from the viewpoint of excellent film formability, it is preferred to be 0.5 g/10 min or more and 30 g/10 min or less, more preferably 0.8 g/10 min or more and 20 g/10 min or less, and most preferably 1 g/10 min or more and 10 g/10 min or less.

The method for producing the above resin composition comprises a step of obtaining a molten mixture (hereinafter also simply referred to as "molten mixture") comprising 70 parts by weight or more and 98.99 parts by weight or less of two or more types of thermoplastic resins (A) comprising at least a polyolefin, and being derived from a recovered material of a used plastic product, 1 part by weight or more and 29.99 parts by weight or less of a compatibilizer (B), and 0.01 parts by weight or more and 5 parts by weight or less of a fatty acid metal salt (C) and/or a saponified ethylene-vinyl acetate copolymer (D). It is noted that the molten mixture is a solid form mixture obtained by cooling a mixed molten material, and can be obtained by mixing and then cooling a molten material (hereinafter also simply referred to as "molten material") comprising 70 parts by weight or more and 98.99 parts by weight or less of the thermoplastic resins (A), 1 part by weight or more and 29.99 parts by weight or less of the compatibilizer (B), and 0.01 parts by weight or more and 5 parts by weight or less of the fatty acid metal salt (C) and/or the saponified ethylene-vinyl acetate copolymer (D).

The mixing of the molten material is not particularly limited as long as each component can be dispersed, and can be produced by commonly used resin kneading devices. Examples of such kneading devices include single-screw extruders, twin-screw extruders, multi-screw extruders, Banbury mixers, pressurized kneaders, rotary rolls, and internal mixers. Among these, twin-screw extruders are preferred from the viewpoint of excellent dispersibility and continuous productivity.

The screw rotation speed when kneading with a twin-screw extruder is not particularly limited, and kneading is preferably performed at 50 rpm or more and 3000 rpm or less, and more preferably at 150 rpm or more and 1000 rpm or less. When the screw rotation speed is 50 rpm or more, the dispersibility of the mixed components is improved, and the resulting resin exhibits excellent physicochemical properties, which is therefore preferable. When the screw rotation speed is 3000 rpm or less, resin deterioration due to excessive shear heating does not occur, and the resulting resin exhibits excellent physicochemical properties, which is therefore preferable.

The molten material is a molten material in which at least one component among the thermoplastic resins (A), the compatibilizer (B), and the fatty acid metal salt (C) and/or the saponified ethylene-vinyl acetate copolymer (D) is melted, and preferably, it is a molten material in which all of the components of the thermoplastic resins (A), the compatibilizer (B), and the fatty acid metal salt (C) and/or the saponified ethylene-vinyl acetate copolymer (D) are melted. The molten material can be obtained by heating raw materials comprising the thermoplastic resins (A), the compatibilizer (B), and the fatty acid metal salt (C) and/or the saponified ethylene-vinyl acetate copolymer (D) at a predetermined content ratio to a temperature equal to or higher than the melting point of the component having the lowest melting point among these components (when the component having the lowest melting point is an amorphous resin, to a temperature equal to or higher than its glass transition temperature). The upper limit of the heating temperature is not particularly limited, but is preferably 300°C or lower.

In addition, when a component other than the thermoplastic resins (A), the compatibilizer (B), and the fatty acid metal salt (C) and/or the saponified ethylene-vinyl acetate copolymer (D) is comprised in the resin composition of the present embodiment, such other component may be included in the molten material in addition to the thermoplastic resins (A), the compatibilizer (B), and the fatty acid metal salt (C) and/or the saponified ethylene-vinyl acetate copolymer (D).

The cooling temperature of the mixed molten material may be any temperature at which the resulting molten mixture becomes solid. For example, it may be a temperature below the melting point of the component having the lowest melting point among the thermoplastic resins (A), the compatibilizer (B), and the fatty acid metal salt (C) and/or the saponified ethylene-vinyl acetate copolymer (D) (when the component having the lowest melting point is an amorphous resin, below its glass transition temperature).

The above resin composition may comprise a component other than the thermoplastic resins (A), the compatibilizer (B), and the fatty acid metal salt (C) and/or the saponified ethylene-vinyl acetate copolymer (D), as long as the effects of the present invention are not impaired. As such other components, one or two or more of the following may be used: an antistatic agent, a light stabilizer, an ultraviolet absorber, a nucleating agent, an antioxidant, an antiblocking agent, a flow modifier, a release agent, a flame retardant, a colorant, an inorganic neutralizing agent, a hydrochloric acid absorber, a filler, a conductive agent, a chain extender, a hydrolysis inhibitor, and the like.

In addition, the above resin composition can be used in any form such as pellets or powder.

The method for molding the above resin composition is not particularly limited, and examples include profile extrusion, film, sheet, blow molding, injection molding, foam molding, extrusion coating, and rotational molding. Among these, film is preferred from the viewpoint of excellent moldability of the resin composition of the present invention.

The method for forming the film is not particularly limited, and examples include inflation molding method, co-extrusion inflation molding method, T-die molding method, co-extrusion T-die molding method, calender molding method, and compression molding method. Among these, inflation molding method, co-extrusion inflation molding method, T-die molding method, and co-extrusion T-die molding method are preferred from the viewpoint of excellent productivity. In addition, the film of the present invention may be laminated with another film, and the method for lamination is also not particularly limited. Examples include dry lamination method, extrusion lamination method, and sandwich lamination method.

According to the resin composition of the present embodiment as described above, the occurrence of fisheyes can be suppressed when formed into a film. It is noted that fisheye is granular lump resembling fish eye that are formed in the film due to foreign matter (such as unmolten material) present therein.

The film according to one aspect of the present invention can be obtained by forming the above resin composition into a film (molding it into a film shape). The film formed of the above resin composition may be a single layer or may be used as a multilayer film. The laminate structure of the multilayer film is not particularly limited, and, for example, may comprise not only a resin composition layer (I) formed of the present invention, but also layers formed of other components, such as a virgin resin layer (II), an adhesive layer (III), and a barrier layer (IV). Specifically, examples include (I) / (II), (II) / (I) / (II), (I) / (III) / (IV) / (III) / (I), and (I) / (III) / (IV) / (III) / (II) . The thickness of the film formed of the above resin composition is not particularly limited, but from the viewpoint of further suppressing the occurrence of fisheyes, it is preferably 10 μm to 300 μm.

The film forming temperature is preferably in the range of 190°C or more and 250°C or less, more preferably in the range of 200°C or more and 250°C or less, and still more preferably in the range of 220°C or more and 250°C or less. When the forming temperature is 190°C or more, the occurrence of fisheyes is reduced, and when the forming temperature is 250°C or less, excellent film formability is achieved, which is therefore preferable.

The above film is useful as packaging containers for foods, daily commodities, industrial parts, pharmaceuticals, office supplies, chemical products, and the like, as well as surface protection films, agricultural films such as silage wraps, shrink films, and transport bags, and the like.

Examples

The present invention will be described below by way of Examples and Comparative Examples, but the present invention is not limited thereto.

(1) Melt Mass-Flow Rate (MFR)

The MFR of the resins used in the Examples was measured under the conditions of 190°C and a load of 2160 g using a melt indexer (manufactured by Takara Industries Co., Ltd.) in accordance with JIS K 6924-1.

(2) Vinyl Acetate Content and Saponification Degree

The vinyl acetate content of an ethylene-vinyl acetate copolymer and a saponified ethylene-vinyl acetate copolymer was measured in accordance with JIS K 7192 (1999), and the saponification degree (% by weight) was calculated according to the following formula.

Saponification degree (% by weight) = 100 × {(Vinyl acetate content (% by weight) of the ethylene-vinyl acetate copolymer before hydrolysis) - (Vinyl acetate content (% by weight) of the ethylene-vinyl acetate copolymer after hydrolysis)} / (Vinyl acetate content (% by weight) of the ethylene-vinyl acetate copolymer before hydrolysis)

(3) Number of fisheyes

The number of fisheyes per 500 cm$^2$ in the resin composition layer of the produced film was visually counted.

[Example 1]

94.6 parts by weight of a composite resin (A1) derived from a recovered material of used film containers (composition: 80 parts by weight polyethylene, 10 parts by weight polyethylene terephthalate (PET), 10 parts by weight nylon 6 (PA6)) as two or more types of thermoplastic resins (A) comprising at least a polyolefin, and being derived from a recovered material of a used plastic product, 5 parts by weight of an ethylene-vinyl acetate copolymer composition (B1) (manufactured by Tosoh Corporation, MFR 10 g/10 min, product name "Melthene S S-A5115") as a compatibilizer (B), and 0.4 parts by weight of magnesium stearate (C1) as a fatty acid metal salt (C) were used. These were pre-blended using a tumbler mixer, and then melt mixing was performed using a twin-screw extruder (manufactured by Technovel Corporation, product name "ULTnano 25TW") with a screw diameter of 25 mm, under conditions of a resin temperature of 260°C (the temperature is equal to or higher than the melting temperatures of A1, B1, and C1) and a screw rotation speed of 600 rpm, followed by cooling to room temperature to obtain resin composition pellets (molten mixture). MFR of the resin composition was 1.3 g/10 min.

Using a three-kind three-layer microcast molding machine (manufactured by Labtech Engineering Co., Ltd.), a three-layer film (film structure: virgin LLDPE layer / resin composition layer / virgin LLDPE layer) was obtained from the above resin composition pellets and virgin linear low-density polyethylene (LLDPE) (produced by Tosoh Corporation, density 910 kg/m$^3$, MFR 2 g/10 min, product name "HF210K").

At this time, the molding temperature for all three layers was set to 230°C, the take-up speed was set to 2 m/min, the film width was set to 50 mm, and the total film thickness was set to 110 μm. The thickness of each layer was set as follows: virgin LLDPE layer / resin composition layer / virgin LLDPE layer = 30 μm / 50 μm / 30 μm.

The number of fisheyes generated in the resin composition layer of the obtained film was measured by the above evaluation method. The results of the evaluation are shown in Table 1.

[Example 2]

93 parts by weight of a composite resin (A1) derived from a recovered material of used film containers (composition: 80 parts by weight polyethylene, 10 parts by weight polyethylene terephthalate (PET), 10 parts by weight nylon 6 (PA6)) as two or more types of thermoplastic resins (A) comprising at least a polyolefin, and being derived from a recovered material of a used plastic product, 5 parts by weight of an ethylene-vinyl acetate copolymer composition (B1) (manufactured by Tosoh Corporation, MFR 10 g/10 min, product name "Melthene S S-A5115") as a compatibilizer (B), and 2 parts by weight of a saponified ethylene-vinyl acetate copolymer (D1) obtained by saponifying an ethylene-vinyl acetate copolymer having an ethylene content of 89 mol% and a vinyl acetate content of 11 mol% to a saponification degree of vinyl acetate component of 80% by weight (manufactured by Tosoh Corporation, MFR 220 g/10 min, product name "Melthene H H6822X") as a saponified ethylene-vinyl acetate copolymer (D) were used. These were pre-blended using a tumbler mixer, and then melt mixing was performed using a twin-screw extruder (manufactured by Technovel Corporation, product name "ULTnano 25TW") with a screw diameter of 25 mm, under conditions of a resin temperature of 260°C (the temperature is equal to or higher than the melting temperatures of A1, B1, and D1) and a screw rotation speed of 600 rpm, followed by cooling to room temperature to obtain resin composition pellets (molten mixture). Except for this, a three-layer film was obtained by the same method as in Example 1. MFR of the resin composition was 1.3 g/10 min.

The number of fisheyes generated in the resin composition layer of the obtained film was measured by the above evaluation method. The results of the evaluation are shown in Table 1.

[Example 3]

Except for using 2 parts by weight of a maleic anhydride-modified polyethylene (B2) (manufactured by SK Geo Centric Japan Co., Ltd., MFR 3 g/10 min, product name "OREVAC OE825") as a compatibilizer (B), a three-layer film was obtained by the same method as in Example 2. MFR of the resin composition was 0.6 g/10 min.

The number of fisheyes generated in the resin composition layer of the obtained film was measured by the above evaluation method. The results of the evaluation are shown in Table 1.

[Example 4]

Except for using 2 parts by weight of a saponified ethylene-vinyl acetate copolymer (D2) obtained by saponifying an ethylene-vinyl acetate copolymer having an ethylene content of 89 mol% and a vinyl acetate content of 11 mol% to a saponification degree of vinyl acetate component of 40% by weight (manufactured by Tosoh Corporation, MFR 16 g/10 min, product name "Melthene H H6410M") as a saponified ethylene-vinyl acetate copolymer (D), a three-layer film was obtained by the same method as in Example 2. MFR of the resin composition was 1.2 g/10 min.

The number of fisheyes generated in the resin composition layer of the obtained film was measured by the above evaluation method. The results of the evaluation are shown in Table 1.

[Example 5]

Except for setting the molding temperature for all three layers of the three-layer film to 210°C, a three-layer film was obtained by the same method as in Example 2. MFR of the resin composition was 1.3 g/10 min.

The number of fisheyes generated in the resin composition layer of the obtained film was measured by the above evaluation method. The results of the evaluation are shown in Table 1.

[Comparative Example 1]

100 parts by weight of a composite resin (A1) derived from a recovered material of used film containers (composition: 80 parts by weight polyethylene, 10 parts by weight polyethylene terephthalate (PET), 10 parts by weight polyamide 6 (PA6)) as two or more types of thermoplastic resins (A) comprising at least a polyolefin, and being derived from a recovered material of a used plastic product was used. It was melt mixed using a twin-screw extruder (manufactured by Technovel Corporation, product name "ULTnano 25TW") with a screw diameter of 25 mm, under conditions of a resin temperature of 260°C (the temperature is equal to or higher than the melting temperature of A1), and a screw rotation speed of 600 rpm to obtain resin composition pellets. Except for this, a three-layer film was obtained by the same method as in Example 1. MFR of the resin composition was 1.0 g/10 min.

The number of fisheyes generated in the resin composition layer of the obtained film was measured by the above evaluation method. The results of the evaluation are shown in Table 1.

[Comparative Example 2]

95 parts by weight of a recycled resin (A1) derived from a recovered material of used film containers (composition: 80 parts by weight polyethylene, 10 parts by weight polyethylene terephthalate (PET), 10 parts by weight polyamide 6 (PA6)) as two or more types of thermoplastic resins (A) comprising a polyolefin, and being derived from a recovered material of a used plastic product, and 5 parts by weight of an ethylene-vinyl acetate copolymer composition (B1) (manufactured by Tosoh Corporation, MFR 10 g/10 min, product name "Melthene S S-A5115") as a compatibilizer (B) were used. These were pre-blended using a tumbler mixer, and then melt mixing was performed using a twin-screw extruder (manufactured by Technovel Corporation, product name "ULTnano 25TW") with a screw diameter of 25 mm, under conditions of a resin temperature of 260°C (the temperature is equal to or higher than the melting temperatures of A1 and B1), and a screw rotation speed of 600 rpm, followed by cooling to room temperature to obtain resin composition pellets (molten mixture). Except for this, a three-layer film was obtained by the same method as in Example 1. MFR of the resin composition was 1.2 g/10 min.

The number of fisheyes generated in the resin composition layer of the obtained film was measured by the above evaluation method. The results of the evaluation are shown in Table 1.

[Table 1]

| Item | | | Example | | | | | Comparative Example | |
|---|---|---|---|---|---|---|---|---|---|
| | | | 1 | 2 | 3 | 4 | 5 | 1 | 2 |
| Formulation | Thermoplastic resins (A) | A1 | 94.6 | 93 | 93 | 93 | 93 | 100 | 95 |
| | Compatibilizer (B) | B1 | 5 | 5 | - | 5 | 5 | - | 5 |
| | | B2 | - | - | 5 | - | - | - | - |
| | Fatty acid metal salt (C) | C1 | 0.4 | - | - | - | - | - | - |
| | Saponified ethylene-vinyl acetate copolymer (D) | D1 | - | 2 | 2 | - | 2 | - | - |
| | | D2 | - | - | - | 2 | - | - | - |
| Molding condition | Molding temperature [°C] | | 230 | 230 | 230 | 230 | 210 | 230 | 230 |
| Performance | Number of fisheyes [count / 500 cm$^2$] | | 8 | 5 | 30 | 50 | 20 | 100 or more | 60 |

Industrial Applicability

The film comprising the resin composition of the present invention is useful as packaging containers for foods, daily commodities, industrial parts, pharmaceuticals, office supplies, chemical products, and the like, as well as surface protection films, agricultural films such as silage wraps, shrink films, and transport bags, and the like.

**Claims**

1. A resin composition comprising:

   70 parts by weight or more and 98.99 parts by weight or less of two or more types of thermoplastic resins (A) comprising at least a polyolefin, and being derived from a recovered material of a used plastic product;
   1 part by weight or more and 29.99 parts by weight or less of a compatibilizer (B); and
   0.01 parts by weight or more and 5 parts by weight or less of a fatty acid metal salt (C) and/or a saponified ethylene-vinyl acetate copolymer (D),
   provided that a total amount of (A), (B), and (C) and/or (D) is 100 parts by weight.

2. The resin composition according to claim 1, wherein the thermoplastic resins (A) comprise at least one resin selected from the group consisting of a polyester, a polyamide, and an ethylene-vinyl alcohol copolymer, as a component other than the polyolefin.

3. The resin composition according to claim 2, wherein the polyester is polyethylene terephthalate, and the polyamide is nylon 6 or nylon 66.

4. The resin composition according to claim 1, wherein the compatibilizer (B) is an ethylene-vinyl acetate copolymer and/or a maleic anhydride-modified polyolefin.

5. The resin composition according to claim 1, wherein the fatty acid metal salt (C) is at least one selected from the group consisting of stearates and hydroxystearates of magnesium, calcium, or zinc.

6. The resin composition according to claim 1, wherein the saponified ethylene-vinyl acetate copolymer (D) is a saponified product of an ethylene-vinyl acetate copolymer having an ethylene content of 75 mol% or more and 95 mol% or less and a vinyl acetate content of 5 mol% or more and 25 mol% or less, and the saponified product has a saponification degree of vinyl acetate component of 20% by weight or more.

7. The resin composition according to claim 1, wherein the saponified ethylene-vinyl acetate copolymer (D) has a melt mass-flow rate of 40 g/10 min or more, as measured under the conditions of 190°C and a load of 2160 g in accordance with JIS K 6924-1.

8. The resin composition according to claim 1, wherein the used plastic product is at least one selected from the group consisting of food packaging container, sanitary product packaging container, cosmetic packaging container, and daily commodity packaging container.

9. A film formed of the resin composition according to any one of claims 1 to 8.

10. A multilayer film comprising at least one layer formed of the resin composition according to any one of claims 1 to 8.

11. A packaging container formed of the film according to claim 9.

12. A packaging container formed of the film according to claim 10.

13. A method for producing the film according to claim 9, comprising molding the resin composition according to any one of claims 1 to 8 at a temperature of 190°C or more and 250°C or less.

14. A method for producing the multilayer film according to claim 10, comprising molding the resin composition according to any one of claims 1 to 8 at a temperature of 190°C or more and 250°C or less.

15. A method for producing a resin composition, comprising a step of obtaining a molten mixture comprising: 70 parts by weight or more and 98.99 parts by weight or less of two or more types of thermoplastic resins (A) comprising at least a polyolefin, and being derived from a recovered material of a used plastic product; 1 part by weight or more and 29.99 parts by weight or less of a compatibilizer (B); and 0.01 parts by weight or more and 5 parts by weight or less of a fatty acid metal salt (C) and/or a saponified ethylene-vinyl acetate copolymer (D).

## INTERNATIONAL SEARCH REPORT

| International application No. |
| --- |
| **PCT/JP2024/007673** |

**A. CLASSIFICATION OF SUBJECT MATTER**

*C08L 101/00*(2006.01)i; *B65D 1/02*(2006.01)i; *B65D 30/02*(2006.01)i; *C08J 11/06*(2006.01)i; *C08K 5/098*(2006.01)i; *C08L 23/08*(2006.01)i; *C08L 23/26*(2006.01)i; *C08L 29/04*(2006.01)i; *C08L 31/04*(2006.01)i
FI:   C08L101/00; B65D1/02 100; B65D30/02; C08J11/06 ZAB; C08K5/098; C08L23/08; C08L23/26; C08L29/04 S; C08L31/04 S

According to International Patent Classification (IPC) or to both national classification and IPC

**B. FIELDS SEARCHED**

Minimum documentation searched (classification system followed by classification symbols)

C08L101/00; B65D1/02; B65D30/02; C08J11/06; C08K5/098; C08L23/08; C08L23/26; C08L29/04; C08L31/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-193327 A (THE NIPPON SYNTHETIC CHEMICAL INDUSTRY CO., LTD.) 11 October 2012 (2012-10-11)<br>claims, paragraph [0008], examples | 1-15 |
| X | JP 2002-234979 A (THE NIPPON SYNTHETIC CHEMICAL INDUSTRY CO., LTD.) 23 August 2002 (2002-08-23)<br>claims, examples | 1-3, 5-15 |
| A | | 4 |
| A | JP 8-85746 A (SUMITOMO CHEMICAL CO., LTD.) 02 April 1996 (1996-04-02)<br>entire text | 1-15 |
| A | WO 2021/193318 A1 (MITSUBISHI CHEMICAL CORPORATION) 30 September 2021 (2021-09-30)<br>entire text | 1-15 |

☑ Further documents are listed in the continuation of Box C.      ☑ See patent family annex.

| | |
| --- | --- |
| \*  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **08 April 2024** | **23 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/007673**

### C.   DOCUMENTS CONSIDERED TO BE RELEVANT

| Category* | Citation of document, with indication, where appropriate, of the relevant passages | Relevant to claim No. |
|---|---|---|
| A | JP 5-32816 A (SUMITOMO BAKELITE CO., LTD.) 09 February 1993 (1993-02-09)<br>entire text | 1-15 |
| A | JP 2010-18694 A (INOAC CORP.) 28 January 2010 (2010-01-28)<br>entire text | 1-15 |
| P, X | JP 2023-154456 A (KURARAY CO., LTD.) 20 October 2023 (2023-10-20)<br>claims, examples | 1-15 |

Form PCT/ISA/210 (second sheet) (July 2022)

INTERNATIONAL SEARCH REPORT
Information on patent family members

International application No.

**PCT/JP2024/007673**

| Patent document cited in search report | | | Publication date (day/month/year) | Patent family member(s) | | | Publication date (day/month/year) |
|---|---|---|---|---|---|---|---|
| JP | 2012-193327 | A | 11 October 2012 | (Family: none) | | | |
| JP | 2002-234979 | A | 23 August 2002 | (Family: none) | | | |
| JP | 8-85746 | A | 02 April 1996 | EP entire text | 693529 | A1 | |
| WO | 2021/193318 | A1 | 30 September 2021 | US entire text EP CN | 2023/0002603 4130158 115362219 | A1 A1 A | |
| JP | 5-32816 | A | 09 February 1993 | (Family: none) | | | |
| JP | 2010-18694 | A | 28 January 2010 | (Family: none) | | | |
| JP | 2023-154456 | A | 20 October 2023 | (Family: none) | | | |

Form PCT/ISA/210 (patent family annex) (July 2022)

**REFERENCES CITED IN THE DESCRIPTION**

**Patent documents cited in the description**

- JP 2001220473 A